(19) Europäisches Patentamt
European Patent Office
Office européen des brevets

(11) Veröffentlichungsnummer: **0 164 546**
**B1**

(12) # EUROPÄISCHE PATENTSCHRIFT

(45) Veröffentlichungstag der Patentschrift: **07.06.89**

(21) Anmeldenummer: **85105189.6**

(22) Anmeldetag: **29.04.85**

(51) Int. Cl.[4]: **C 07 C 69/52**, C 07 C103/10, C 07 C127/15, C 07 C125/06, C 08 K 5/11, C 08 K 5/20, C 08 K 5/21

(54) **Härtungskomponente für Kunstharze, die zur Amid- oder Esterbildung mit Carbonsäuren befähigte Gruppen enthalten.**

(30) Priorität: **11.05.84 DE 3417441**

(43) Veröffentlichungstag der Anmeldung: **18.12.85 Patentblatt 85/51**

(45) Bekanntmachung des Hinweises auf die Patenterteilung: **07.06.89 Patentblatt 89/23**

(84) Benannte Vertragsstaaten: **AT BE CH DE FR GB IT LI NL SE**

(56) Entgegenhaltungen:
**EP-A- 0 126 329**
**FR-A- 1 447 188**
**GB-A- 2 063 248**

(73) Patentinhaber: **HOECHST AKTIENGESELLSCHAFT**
**Postfach 80 03 20**
**D-6230 Frankfurt am Main 80 (DE)**

(72) Erfinder: **Walz, Gerd, Dr.**
**Pfingsbornstrasse 99**
**D-6200 Wiesbaden (DE)**

**EP 0 164 546 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der älteren europäischen Patentanmeldung 84.104680.8 (EP-OS 126 329) sind Härter fur Kunstharze, die zur Amid- und/oder Esterbildung mit Carbonsäuren befähigte Gruppen enthalten. Diese Härter sind Michael-Additionsprodukte von zur Michael-Addition befähigten Mono- oder Dicarbonsäureestern an Verbindungen, die mindestens eine zur Michael-Addition befähigte Doppelbindung enthalten. Sie enthalten im Mittel mindestens zwei umesterungs- bzw. umamidierungsfähige Estergruppen pro Molekül.

Diese Härter zeichnen sich dadurch aus, daß sie mit zur Ester- oder Amidbildung befähigten Kunstharzen schon bei relativ niedrigen Temperaturen von etwa 160 °C unter Vernetzung reagieren, und daß die dabei entstehenden Spaltprodukte wenig umweltbelastend sind, vor allem wenn die umesterungs- bzw. umamidierungsfähigen Estergruppen als Alkoholkomponente niedere Alkohole, insbesondere Ethanol enthalten.

Es besteht indessen großes Interesse daran, die Abspaltverluste beim Härten von Lackfilmen bei gleicher Vernetzungsdichte weniger zu vermindern, um einerseits die Abluft noch weniger zu belasten, und um andererseits das eingesetzte Material möglichst weitgehend im Lackfilm zu halten.

Gemäß der Erfindung besteht die Härtungskomponente für Kunstharze, die zur Amid- und/oder Esterbildung mit Carbonsäure befähigten Gruppen enthalten, aus dem Michael-Additionsprodukt eines zur Michael-Addition befähigten Mono- oder Dicarbonsäureesters aus der Gruppe Ester der Malonsäure, Cyanessigsäure, Acetondicarbonsäure oder ein an der CH-aciden Methylgruppe monoalkylsubstituiertes Derivat dieser Säuren, an eine Verbindung, die mindestens zwei zur Michael-Addition befähigte Doppelbindungen enthält aus der Gruppe Ester, Amid, Urethan- oder Harnstoffderivat einer α,β-ungesättigten Mono- oder Dicarbonsäure, wobei das Michael-Additionsprodukt im Mittel mindestens eine umesterungs- bzw. umamidierungsfähige Estergruppe und mindestens eine polymerisationsfähige Doppelbindung pro Molekül enthält.

Durch die Michael-Addition von ungesättigten Verbindungen mit verhältnismäßig geringem Molekulargewicht an die genannten Mono- oder Dicarbonsäureester entstehen Verbindungen, deren Dampfdruck unter Einbrennbedingungen niedrig genug ist, so daß die Ester nicht aus dem zu härtenden Lackfilm entweichen. Überraschenderweise wird aber auch die Hydrolyseanfälligkeit der Ester dadurch drastisch herabgesetzt, so daß sie in wäßrigen Systemen für die Elektrotauchlackierung als Härterkomponente eingesetzt werden können. Es war ferner überraschend, daß die Vernetzung mit den erfindungsgemäßen Härtungskomponenten auch über Reaktionen der Doppelbindung bei vergleichsweise niedrigen Temperaturen erfolgt.

Für die zur Michael-Addition befähigte Verbindung (Michael Donator) haben sich die Ester der Cyanessigsäure als besonders geeignet erwiesen.

Als Veresterungskomponente für den Michael-Donator kommen bevorzugt geradkettige oder verzweigte Alkanole mit vorzugsweise 1 bis 8 Kohlenstoffatomen, insbesondere Methanol oder Ethanol in Frage. Es kann vorteilhaft sein, wenn die Veresterungskomponente zum Teil aus einem verzweigten Alkanol, insbesondere 2-Ethylhexanol besteht, da damit in manchen Fällen der Neigung einer Lackschicht zur Kraterbildung beim Einbrennen entgegengewirkt werden kann. Die Methyl- und Ethylester ergeben besonders niedrige Einbrenntemperaturen und niedrige Abspaltprodukte, die außerdem besonders unbedenklich sind.

Bei der α,β-ungesättigten Mono- oder Dicarbonsäure in der zur Michael-Addition befähigten, Doppelbindungen enthaltenden Verbindung (Michael-Akzeptor) handelt es sich vorzugsweise um Acrylsäure, Methacrylsäure, Dimethacrylsäure, Crotonsäure, Maleinsäure oder Fumarsäure.

Nach einer weiteren Ausführungsform der Erfindung ist dieser Michael-Akzeptor ein Ester einer α,β-ungesättigten Mono- oder Dicarbonsäure mit einem Polyol, das vorzugsweise 2 bis 4 Hydroxylgruppen aufweist. Insbesondere kann dieser Ester ausgewählt sein aus der Gruppe der Alkandioldiacrylate oder -dimethacrylate, Trimethylolpropantriacrylat oder -trimethacrylat und Pentaerythrit-tetraacrylat oder -tetramethacrylat. Bei diesen Estern handelt es sich um leicht zugängliche Handelsprodukte.

Eine andere Gruppe von Härtungskomponenten, die besonders die Haftung von damit gehärteten Lackfilmen auf Stahlblech und die Haftung von Beschichtungen auf PVC-Basis auf dem gehärteten Lackfilm günstig beeinflußt, umfaßt Michael-Additionsprodukte, die substituierte Urethane oder Harnstoffe der allgemeinen Formel

$$(Ac\overset{O}{\overset{\|}{C}} - B - A)_n - R_{m+n}\ (A - B - \overset{O}{\overset{\|}{C}} - AcM)_m \qquad (I)$$

darstellen, in der die einzelnen Zeichen folgende Bedeutung haben :

$R_{m+n}$ ist der (m + n)-wertige Rest eines multifunktionellen Isocyanats,
m ist eine ganze Zahl, mindestens 1,
n ist eine ganze Zahl, mindestens 1,

A ist eine chemische Bindung oder einen Amidoalkylen-, ein O-Alkylen-, ein Amidocycloalkylen- oder ein O-Cycloalkylenrest,

B ist eine Amidogruppe oder ein Sauerstoffatom,

O
|
CAc ist der Acylrest einer α,β-ungesättigten Mono- oder Dicarbonsäure und

M ist der durch Michael-Addition an das Molekül addierte Ester einer Mono- oder Dicarbonsäure, mit der Maßgabe, daß das Molekül mindestens eine polymerisierbare Doppelbindung und mindestens eine Estergruppe aus dem zur Michael-Addition befähigten Carbonsäureester (M) enthält, und daß B eine Amidogruppe ist, wenn A eine chemische Bindung ist.

In einer vorteilhaften Abwandlung der vorstehend gemäß Formel (I) beschriebenen Härterkomponente ist A ein Rest der Formel

-O-CH-CH2-
  |
  CH2
  |
  O-C-R'  (II)
    ||
    O

wobei R' ein in α-Stellung zur Carboxylgruppe verzweigter Alkylrest mit 9-11 C-Atomen und B in Formel (I) ein Sauerstoffatom ist.

Lackfilme, die Verbindungen mit Resten der oben angeführten Formel (II) enthalten, neigen vielfach weniger zur Kraterbildung während des Einbrennens und weisen günstige Korrosionsschutzeigenschaften auf.

In einer weiteren vorteilhaften Abwandlung der Härtungskomponente gemäß (I) ist A ein von einem 1,2-Diol mit mindestens 5 C-Atomen in unverzweigter Kette abgeleiteter Rest und B ein Sauerstoffatom. Die entsprechende Ausgangsverbindung

O
"
AcC-A-OH

erhält man beispielsweise durch Umsetzen eines 1,2-Alkenoxids mit einer α,β-ungesättigten Mono- oder Dicarbonsäure. Je nach der Kettenlänge des 1,2-Diols haben die so aufgebauten Härtungskomponenten die Eigenschaft, den Lackfilm bei der elektrophoretischen Abscheidung weichzustellen, wodurch die Erzielung dickerer Lackschichten möglich ist. In der Regel reicht es aus, wenn nur ein Teil der Härtungskomponenten aus einer derartigen weichmachenden Verbindung besteht.

Ähnliche Wirkung zeigen Härtungskomponenten, bei denen A in Formel (I) die Struktur

        O
        "
$O(CH_2)_YO-C-(CH_2)_Z$

aufweist, B ein Sauerstoffatom, Y eine ganze Zahl, vorzugsweise 2, und Z eine ganze Zahl, mindestens 5, ist. Die entsprechende Ausgangsverbindung

  O              O
  "              "
$Ac-C-O(CH_2)_Y-OC-(CH_2)_ZOH$

erhält man beispielsweise durch Anlagern eines Hydroxyalkylesters einer α,β-ungesättigten Carbonsäure an ein Lacton. Das Umsetzungsprodukt aus Hydroxyethylacrylat und ε-Caprolacton ist ein typischer, im Handel erhältlicher Vertreter dieser Verbindungsklasse.

Härtungskomponenten gemäß der Erfindung, die den Glycerinester einer in α-Stellung verzweigten Carbonsäure mit 9-11 C-Atomen als Molekülbestandteil enthalten, erhält man dadurch, daß man aus einer α,β-ungesättigten Dicarbonsäure, einem Diol und dem Glycidylester einer in α-Stellung verzweigten Carbonsäure mit 9-11 C-Atomen einen ungesättigten Mischester herstellt, und an diesen einen zur Michael-Addition befähigten Mono- oder Dicarbonsäureester in solcher Menge anlagert, daß noch polymerisationsfähige Doppelbindungen im Molekül verbleiben.

Eine weitere Klasse von Härtungskomponenten gemäß der Erfindung sind die Michael-Additionsprodukte von zur Michael-Addition befähigten Mono- oder Dicarbonsäureestern an Amide von α,β-ungesättigten Mono- oder Dicarbonsäuren, z. B. an Methylenbisacrylamid, Toluylenbisacrylamid, Hexamethylenbisacrylamid oder Isophoronbisacrylamid.

Die erfindungsgemäßen Härter können in Zweikomponentenlacken zusammen mit einem zur Amid-und/oder Esterbildung mit Carbonsäuren befähigten Kunstharz verwendet werden. Geeignet sind auch Kunstharze, die außerdem polymerisierbare Doppelbindungen enthalten.

Kunstharze, die mit der erfindungsgemäßen Härterkomponente bei erhöhter Temperatur gehärtet werden können, sind an sich bekannte Verbindungen mit Molekulargewichten von etwa 300 bis etwa 20000, die zur Ester- oder Amidbildung befähigte Gruppen enthalten. Es sind dies beispielsweise Polymerisate aus olefinisch ungesättigten Monomeren, die als Bestandteil Hydroxyester und/oder Aminoester von olefinisch ungesättigten Säuren wie Aminoalkylacrylate oder Hydroxyalkylacrylate oder die entsprechenden Methacrylate enthalten. Eine weitere Gruppe sind die aus dimerisierten Fettsäuren und Polyaminen erhältlichen Polyaminoamide. Amino-polyether-polyole erhält man z. B. durch Umsetzung von Epoxidharzen aus Polyphenolen und Epihalogenhydrinen mit primären und/oder sekundären Aminen.

Kunstharze, die Carbonsäure- oder Aminogruppen enthalten, können vielfach durch Basen oder Säuren wasserlöslich gemacht und aus solchen Lösungen anodisch oder kathodisch abgeschieden werden. Aufgrund ihrer Hydrolysebeständigkeit eignen sich die erfindungsgemäßen Härterkomponenten besonders als Bestandteil solcher Elektrotauchlacke. Besonders gute Ergebnisse werden in Verbindung mit kationischen Amino-polyether-polyolen erhalten.

Die Härtung der amin- und/oder hydroxylhaltigen Kunstharze erfolgt durch Umamidierung und/oder Umesterung mit den durch Michael-Addition eingeführten Estergruppen und durch Vernetzungsreaktionen der polymerisierbaren Doppelbindungen bei erhöhter Temperatur, wobei die erforderliche Temperatur von der Alkoholkomponente dieser Ester abhängt und um so tiefer ist, je niedriger das Molekulargewicht der Alkoholkomponente ist. Besonders niedrige Härtungstemperaturen erhält man daher mit den Methyl- und Ethylestern. Durch Zusatz von Katalysatoren, die die Umesterung bzw. Umamidierung beschleunigen, können Härtungstemperaturen von etwa 140-160 °C erreicht werden. Höhere Temperaturen bis etwa 250 °C sind möglich. Als Katalysatoren eignen sich beispielsweise Metallsalze organischer Säuren, insbesondere Zink-, Blei-, Eisen- oder Chromoctoat oder -naphthenat. Diese Katalysatoren beschleunigen auch die Vernetzungsreaktionen der im Härtermolekül enthaltenden Doppelbindungen.

Kunstharz und Härter werden in solchen Verhältnissen gemischt, daß das Verhältnis der Summe von Molen an zur Ester- und Amidbildung fähigen Gruppen im Kunstharz zur Summe der Mole an Doppelbindungen und umesterungs- und umamidierungsfähigen Gruppen im Härter 0,1-10, vorzugsweise 0,3-3 beträgt.

Die Menge des Katalysators zu Beschleunigung des Härtungsvorganges liegt zwischen 0 und 10 %, berechnet als Gewichtsmenge Metall und bezogen auf das Gesamtgewicht von Kunstharz und Härter.

Die Herstellung der erfindungsgemäßen Härterkomponenten erfolgt nach an sich bekannten Methoden.

Die Michael-Addition läuft grundsätzlich bei Raumtemperatur und auch darunter ab. Durch Temperaturerhöhung und durch Zugabe von Katalysatoren kann sie beschleunigt werden. Geeignete Katalysatoren sind basische Verbindungen wie Alkalihydroxide, Alkalialkoholate und basische Aminoverbindungen.

Der zur Michael-Addition befähigte Carbonsäureester kann an der CH-aciden Methylengruppe monosubstituiert sein. In diesem Fall werden mit $\alpha,\beta$-ungesättigten Carbonylverbindungen, insbesondere Carbonsäurederivaten, Monoadditionsprodukte erhalten. Verfügt der genannte Carbonsäureester über eine unsubstituierte CH-acide Methylengruppe, so können oligomere Addukte erhalten werden, bei denen beide aciden H-Atome eine Michael-Addition mit einer $\alpha,\beta$-ungesättigten Carbonylverbindung eingehen. Auch auf diesem Weg läßt sich das Molekulargewicht und die Funktionalität der Härter und die Verteilung der zur Umesterung bzw. Umamidierung befähigten Estergruppen sowie der polymerisierbaren Doppelbindungen im Härtermolekül variieren und besonderen Anforderungen anpassen.

Härtungskomponenten, die Urethan- oder Harnstoffgruppen enthalten, und die der Formel I entsprechen, erhält man durch Umsetzung von Hydroxyestern, Hydroxyamiden, Amiden, Aminoestern oder Aminoamiden $\alpha,\beta$-ungesättigter Säuren mit Isocyanaten und anschließende Michael-Addition eines zur Michael-Addition befähigten Mono- oder Dicarbonsäureesters. Als Isocyanate können dabei vor allem die großtechnisch verfügbaren Stoffe wie Toluylendiisocyanat, Hexamethylendiisocyanat und Isophorondiisocyanat in Frage kommen. Die Bildung des Harnstoffs oder Urethans verläuft im allgemeinen bei mäßigen Temperaturen und kann durch bekannte Katalysatoren, z. B. Dibutylzinndilaurat, beschleunigt werden. Wenn die Reaktion in einem Lösemittel durchgeführt werden soll, so wählt man ein gegenüber Isocyanaten inertes Lösemittel und für die Herstellung von Härterkomponenten, die in wäßrigen Systemen eingesetzt werden sollen, vorzugsweise ein wasserlösliches Lösemittel wie Diethylenglykoldimethylether, Aceton, Methylethylketon oder Methylisobutylketon.

Zu Härterkomponenten, die Amidogruppen enthalten, gelangt man, wenn man statt eines Esters oder Amids die freie $\alpha,\beta$-ungesättigte Säure einsetzt. In diesem Fall bildet sich aus der Säure und dem Isocyanat unter Decarboxylierung direkt das entsprechende Amid.

Die erfindungsgemäßen Härtungskomponenten sind in der vorliegenden Beschreibung als einheitliche chemische Individuen darstellt. In der Praxis ergeben sich vielfach infolge der Multifunktionalität von Ausgangsstoffen statistische Gemische. Für die Verwendbarkeit als Härter gemäß der Erfindung spielt das keine Rolle.

In den folgenden Beispielen sind Teile (T) Gewichtsteile und Prozent (%) Gewichtsprozent.

## Beispiele

### I. Herstellung der Härter

1. In einem Reaktor wurden 4,5 T Cyanessigsäuremethylester, 0,4 T Benzyltrimethylammoniumhydroxid vorgelegt, auf 60 °C erhitzt und anschließend 226,3 T Hexandioldiacrylat zugetropft und die Reaktionsmischung so lange bei 60 °C gehalten, bis der Gehalt an Doppelbindungen —C=C— = 8,5 % betrug. Anschließend wurden 0,5 T Ameisensäure und 1,5 T Hydrochinonmonomethyläther zugestzt. Es wurde eine viskose, hellgelbe Flüssigkeit erhalten.

2. (Vorprodukt) In einem Reaktor wurden 2160 T Hydroxyethylacrylat mit einer Säurezahl ≤ 1, 3,8 T Zinkacetylacetonat, 422 T Diglykoldimethylether vorgelegt, auf 60 °C erhitzt, 1636 T Toluylendiisocyanat langsam zugetropft und so lange bei 60 °C gehalten, bis der Gehalt an —N=C=O Gruppierungen kleiner als 0,2 % war. Anschließend werden 15 T Hydrochinon und 422 T Ethylenglykol zugesetzt. Es wurde ein 80 %iges helles, viskoses Harz mit einem Doppelbindungsgehalt von 9,5 %, bezogen auf Lösung erhalten.

1016 T 80 %iges Vorprodukt, 10 T KOH, 30 %ig in Methanol, wurden in einem Reaktor vorgelegt, auf 80 °C erhitzt und 132 T Malonsäuredimethylester langsam zugestropft, so daß 80 °C nicht überschritten wurden. Bei 80 °C wurde so lange gehalten, bis der Gehalt an Doppelbindungen auf —C=C— = 4,2 % abgefallen war. Die Reaktionsmischung wurde mit Ethylglykol auf 80 % Festkörper verdünnt und mit 2 T Eisessig versetzt. Es wurde ein viskoses, gelbliches Harz erhalten.

3. 260 T Acetessigsäureethylester, 3 T KOH, 30%ig in Methanol, 50 T Ethylglykol wurden vorgelegt und auf 60 °C erhitzt. Anschließend wurden 678 T Hexandioldiacrylat langsam zugetropft und die Reaktionstemperatur so lange auf 60 °C gehalten, bis der Gehalt an Doppelbindungen —C=C— = 4,7 % beträgt. Danach wurden 1 T Ameisensäure und 2 T Hydrochinon zugesetzt und der Festkörper mit Ethylglykol auf 80 % eingestellt. Es wurde ein niederviskoses, gelbes Harz erhalten.

4. (Vorprodukt) 520 T Glycidylester einer gesättigten, in α-Stellung verzweigten Fettsäure mit 9-11 C-Atomen mit einem Epoxidäquivalentgewicht von 260, 130 T Acrylsäure, 1 T Chrom-III-Octoat (entwässert), 1 T Hydrochinonmonomethyllether wurden in einem Reaktor so lange auf 80 °C erhitzt, bis die Säurezahl < 1 ist. Anschließend wurden 1 T Zinkacetylacetonat zugegeben und langsam bei 60 °C 175 T Toluylendiisocyant zugetropft und so lange bei 60 °C gehalten, bis der Gehalt an —N=C=O < 0,5 % betrug. Anschließend wurden erneut 3 T Hydrochinonmonomethylether zugegeben.

10 T Tetrabutylammoniumhydroxid, 828 T Vorprodukt wurden in einem Reaktor vorgelegt, auf 60 °C erhitzt und langsam 70 T Cyanessigsäurebutylester zugetropft und bei 60 °C gehalten, bis der Gehalt an —C=C— = 2,7 % betrug. Danach wurden 3 T Hydrochinon und 2 T Milchsäure zugesetzt und der Ansatz mit Butylglykol auf 80 % Festkörper verdünnt. Es wurde ein grünliches, mäßig viskoses Harz erhalten.

5. (Vorprodukt) 370 T Diglycidylether des Bisphenol A, Epoxidäquivalentgewicht = 185, 1 T Cr-(III)-Octoat (entwässert) wurden in einem Reaktor vorgelegt und auf 60 °C erwärmt. Anschließend wurden langsam 140 T Acrylsäure zugetropft und die Reaktionsmischung so lange bei 60 °C gehalten, bis die Säurezahl unter 1 gefallen war.

510 T Vorprodukt, 3 T KOH, 30 %ig in Methanol, 100 T Ethylglykol wurden in einem Reaktor vorgelegt, auf 60 °C erhitzt und anschließend 115 T Acetessigsäure-2-Ethylhexylester zugetropft und so lange bei 60 °C gehalten, bis der Gehalt an Doppelbindungen —C=C— = 3,3 % betrug. Danach wurden 3 T Ameisensäure und 7 T Hydrochinon zugesetzt und die Mischung anschließend auf 80 % Festkörper mit Ethylglykol verdünnt.

6. 300 T Trimethylolpropantriacrylat, 3 T KOH, 30 %ig in Methanol wurden in einem Reaktor vorgelegt und auf 60 °C erhitzt. Anschließend wurden 540 T Acetessigsäure-2-ethylhexylester zugetropft und so lange bei 60 °C reagiert, bis keine Doppelbindungen mehr titrierbar waren. Anschließend wurden 1526 T 80 %iges Vorprodukt aus Beispiel 2 bei 60 °C zudosiert und solange reagiert, bis der Gehalt an Doppelbindungen —C=C— = 3,0 % betrug. Nach Zugabe von 10 T Ameisensäure und 10 T Hydrochinon wurde mit Diglykoldimethylether auf 80 % Festkörper verdünnt, wobei ein gelbes, hochviskoses Harz erhalten wurde.

7. 230 T Hydroxyethylacrylat mit einer Säurezahl < 1, 160 T Malonsäurediethylester, 1 T Benzyltrimethylammoniumhydroxid wurden im Reaktor (Nr. 1) vorsichtig auf 60°C erhitzt, bis der Gehalt an Doppelbindungen —C=C— 0,5 % ist.

In einem zweiten Reaktor (Nr. 2) wurden gleichzeitig 350 T Toluylendiisocyant, 230 T Hydroxyethylacrylat, 2 T Zinkacetylacetonat auf 60°C erhitzt und so lange reagiert, bis nur noch die Hälfte an freien Isocyanatgruppen gefunden wurden. Anschließend wurde das im Reak tor (2) erzeugte Reaktionsgemisch bei 60 °C vorsichtig zum Reaktionsgemisch aus dem Reaktor (1) zudosiert und so lange umgesetzt, bis keine freien —N=C= O-Gruppen mehr titrierbar waren. Danach wurden 4 T Aneisensäure und 10 T Hydrochinon, zugesetzt und mit Ethylglykol auf 80 % Festkörper verdünnt. Es wurde ein sehr hochviskoses, gelbes Harz erhalten.

8. 696 T Acetessigsäuremethylester, 1582 T Hexandioldiacrylat, 3 T Benzyltrimethylammoniumhydroxid, wurden vorsichtig auf 60 °C erhitzt und so lange umgesetzt, bis der Gehalt an Doppelbindungen —C=C— = 2,1 % betrug. Anschließend wurden 2 T Ameisensäure und 10 T Hydrochinonmonomethylether zugesetzt und anschließend mit Ethylglykol auf 80 % Festkörper verdünnt. Es wurde eine sehr hochviskose, bräunliche Lösung erhalten.

9. In einem Reaktor wurden 1016 T 80 %iges Vorprodukt aus Beispiel 2, 200 T Polyepoxid-Amin-Addukt A, 70 %ig in Ethylglykol (siehe unten), als Katalysator vorgelegt und anschließend 132 T Malonsäuredimethylester langsam zugetropft, so daß 60 °C nicht überschritten wurden, anschließend wurde so lange bei 60 °C gehalten, bis der Gehalt an Doppelbindungen auf —C=C— = 3,6 % abgefallen war. Die Reaktionsmischung wurde mit Ethylglykol auf 80 % Festkörper verdünnt und mit 1,8 T Eisessig versetzt. Es wurde ein hochviskoses bräunliches Harz erhalten.

II. Herstellung der aminhaltigen Polymeren

Polyepoxid-Amin-Addukt A

| | |
|---|---|
| 3,6 T Dimethylaminopropylamin<br>16,1 T 2-Ethylhexylamin<br>79,2 T Ethylenglykolmonoethylether | Mischung I |

Mischung I wurde auf eine Temperatur von ca. 143 °C in einem 2-l-Kolben, ausgestattet mit Rückflußkühler, Rührer und elektrischer Widerstandsheizung, bis zum leichten Rückfluß erhitzt.

317 T Bisphenol A-Epoxidharz mit einem Epoxidäquivalentgewicht von 480 wurden in 136 T Ethylenglykolmonoethylether aufgelöst und bei 143 °C langsam innerhalb einer Stunde zu Mischung I zugetropft. Anschließend ließ man, 130 T epoxidiertes Sojaöl mit einem Epoxidäquivalent von 260 innerhalb einer Stunde bei 143 °C zutropfen und hielt das Gemisch danach noch 10 Stunden bei 142 °C. Es wurde eine 70 %ige Lösung eines Epoxid-Amin-Adduktes in Ethylenglykolmonoethylether erhalten.

Polyepoxid-Amin-Addukt B

683 T eines Bisphenol A-Epoxidharzes mit einem Äquivalentgewicht von 480 wurden in 339 T Ethylglykol aufgelöst und auf 80 °C erhitzt. Anschließend wurden 50,4 T Diethanolamin und 57,8 T Diisopropylaminoethylamin gleichzeitig zugetropft. Die Reaktionsmischung wurde 3 Stunden bei 80 °C gehalten.

Amin Addukt C

Es wurde ein Polyaminoamid nach bekannten Methoden aus dimeren Fettsäuren und Diethylentriamin hergestellt, so daß ein Polyaminoamid mit folgenden Kennzahlen entstand: Festkörper: 100 %, Aminzahl: 300, Säurezahl: ca. 2, Viskosität (75 °C): 3500 mPa· s,

Das Polyaminoamid wurde in Dimethyldiethylenglykol zu einer 70 %igen Lösung gelöst.

III. Härtung der Harze

100 T einer 70 %igen Lösung des basischen Polymerem A wurden mit 300 T Titandioxid und 50 T Bleisilikat versetzt. Die Mischung wurde auf einem Dreiwalzenstuhl abgerieben. In entsprechender Weise wurde auch mit den basischem Polymeren B und C verfahren.

Die Zusammensetzung der Elektrophoresebäder, die Härtungsbedingungen sowie die Eigenschaften der gehärteten Produkte sind aus nachstehender Tabelle 1 ersichtlich.

Die Herstellung der Elektrophoresebäder wurde so durchgeführt, daß jeweils die in Tabelle 1 angegebene Menge des pigmentierten basischen Polymeren A, B oder C mit der ebenfalls angegebenen Menge an Härter und Katalysator sowie Ameisensäure zunächst mit einem schnell laufendem Rührwerk homogenisiert uns anschließend langsam mit deionisiertem Wasser versetzt wurde, bis der Festkörpergehalt des Elektrophoresebades ca. 19 % betrug.

Die elektrophoretische Abscheidung wurde in der Weise vorgenommen, daß in eine Kunststoffwanne mit einer Anode aus Edelstahl und einem als Kathode geschalteten Blech mit einer Zinkphosphat-Bonderschicht die 19 %igen Elektrophoresebäder eingefüllt wurden und die Abscheidung unter Anlegung einer Gleichspannung, die jeweils 50 V unter der Aufbruchspannung lag, während 2 Minuten erfolgte. Durch Zusatz von Ethylenglykolmonohexylether zu den Elektrophoresebädern wurde die Schichtdicke der abgeschiedenen Filme so. einreguliert, daß die Schichtdicke der eingebrannten Filme zwischen 18 und 25 µm lag. Die abgeschiedenen Filme wurden mit entsalztem Wasser abgespült und anschließend, wie in Tabelle 1 angegeben, eingebrannt. Die so beschichteten Bleche zeigten die in Tabelle 1 angegebenen lacktechnischen Eigenschaften.

(Siehe Tabelle 1 Seite 7 f.)

Tabelle 1

| Anwendungsbeispiel Nr. | Pigmentiertes basisches Harz Menge an A | Menge an B | MEQ+ | Härter aus Beispiel | Menge T | Bleioctoat Metallgehalt 24 % T | Zinkoctoat Metallgehalt 8 % T | Einbrennbedingung min/°C | Erichsentiefung in mm | Korrosionstest nach ASTM B 117/6 (bis 2 mm Unterwanderung am Andreaskreuz) h |
|---|---|---|---|---|---|---|---|---|---|---|
| 10 | 1350 | - | 40 | 1 | 200 | 30 | - | 20/160° | 8,3 | > 600 |
| 11 | 1350 | - | 35 | 2 | 295 | 30 | - | 20/150° | 7,6 | > 650 |
| 12 | 1350 | - | 40 | 3 | 180 | - | 35 | 20/170° | 8,2 | > 500 |
| 13 | 1350 | - | 40 | 4 | 350 | 30 | - | 20/180° | 9,5 | > 600 |
| 14 | 1350 | - | 40 | 5 | 400 | 30 | - | 20/160° | 8,2 | > 500 |
| 15 | 1350 | - | 35 | 7 | 290 | 35 | 10 | 20/140° | 8,3 | > 500 |
| 16 | 1350 | - | 40 | 1 | 220 | 50 | 10 | 20/160° | 8,1 | > 600 |
| 17 | - | 1350 | 60 | 7 | 280 | 30 | - | 20/160° | 8,5 | > 650 |
| 18 | - | 1350 | 55 | 9 | 250 | 40 | 20 | 20/140° | 7,6 | > 600 |
| 19 | 1350 | Teile Aminaddukt C | 60 | 5 | 280 | - | 30 | 20/170° | 7,5 | > 500 |

Tabelle 1 Lacktechnische Eigenschaften von abgeschiedenen und eingebrannten Elektrophoresebädern.
+MEQ = Milliäquivalent Ameisensäure pro 100 T Bindemittel fest

20. In einem Reaktor wurden 260 T Dodecen-1-oxid, 90 T Acrylsäure, 1 T entwässertes Chrom-III-octoat, 0,3 T Hydrochinonmonomethylether vorsichtig auf 80 °C erhitzt, bis die Säurezahl < 1 ist. Anschließend wurden 1047,3 T Hydroxyethylacrylat, 2,3 T Zinkacetylacetonat zugesetzt und bei 60 °C langsam 898,5 T Toluylendiisocyanat zugetropft und so lange umgesetzt, bis der —N=C=O Gehalt < 0,5 betrug. Dann wurden 10 T KOH, gelöst in 20 T Methanol, zugetropft und anschließend bei 60 °C 509,4 T Cyanessigsäure-2-ethylhexylester zugegeben und bei 60 °C so lange gehalten, bis der Gehalt an Doppelbindungen —C=C— = 4 % war. Anschließend wurde mit n-Hexylglykol auf 80 % verdünnt. Es wurde eine hochviskose grünfarbige Lösung erhalten.

21. In einem Reaktor wurden 228 T ε-Caprolacton, 230 T Hydroxy ethylacrylat, 1 T Natriummethylat, 1 T Magnesiummethylat und 5 T Hydrochinonmonomethylether auf 80 °C erhitzt und so lange auf 80 °C gehalten, bis der Gehalt an freiem ε-Caprolacton < 5 % war. Anschließend wurden 174 T Tolyuylendiisocyanat bei 60 °C langsam zugetropft und so lange gehalten, bis —N=C=O < 0,5 war. Anschließend wurden 80 T Cyanessigsäure-2-ethylhexylester zugetropft und so lange bei 60 °C gehalten, bis der Gehalt an Doppelbindungen —C=C— = 3,2 % betrug. Anschließend wurde mit Phenoxypropanol auf 80 % verdünnt. Es wurde eine sehr hochviskose klare Lösung erhalten.

Herstellung der Kataphoresebäder

Die 70 %ige Lösung des Epoxidaminadduktes A wurde auf 100 °C erhitzt und das Lösemittel im Vakuum möglichst vollständig abdestilliert, anschließend wurde bei 80 °C die Härterlösung aus Beispiel 20 zugesetzt, homogenisiert (Verhältnis Epoxidaminaddukt : Härter fest auf fest 75 : 25), mit Bleioctoat versetzt, so daß auf Gesamtfestkörper 0,6 % Pb enthalten waren und anschließend unter starkem Rühren in mit Ameisensäure versetztes Wasser von 50 °C gegossen. Die Ameisensäure war so berechnet, daß ein MEQ = 50, berechnet auf Festharz, erhalten wurde. Der Festkörper betrug 35 %. Diese 35 %ige stark trübe Lösung in Wasser wurde nach bekannten Methoden mit Titandioxid und basischem Bleisilikat pigmentiert, so daß das Pigment-Bindemittelverhältnis 0,4 : 1 betrug und das Verhältnis Bleisilikat zu Titandioxid 1 : 6. Anschließend wurde die pigmentierte Lösung mit Wasser auf 20 % Festkörper eingestellt und in einer Abscheideapparatur mit Eisenblech als Kathode und einer Edelstahlanode bei 28 °C Badetemperatur, abgeschieden (2 Minuten Abscheidezeit, 250 V Spannung bei einem Elektrodenabstand von 10 cm). Der Film wurde anschließend 20 min bei 150 °C eingebrannt. Es wurde ein 37 μm dicker gleichmäßiger Film erhalten mit guten mechanischen und korrosionsschützenden Eigenschaften.

In der gleichen Weise wurde mit dem Härter aus Beispiel 21 verfahren. Dieser Film wurde 20 Minuten bei 160 °C eingebrannt. Er war ca. 40 μm dick und besaß ebenfalls ausgezeichnete mechanische und korrosionsschützende Eigenschaften.

**Patentansprüche** (für die Vertragsstaaten : BE, CH, DE, FR, GB, IT, LI, NL, SE)

1. Härterkomponente für Kunstharze, die zur Ester- und/oder Amidbildung mit Carbonsäuren befähigte Gruppen enthalten, bestehend aus dem Michael-Additionsprodukt eines zur Michael-Addition befähigten Mono- oder Dicarbonsäureesters aus der Gruppe Ester der Malonsäure, Cyanessigsäure, Acetessigsäure, Acetondicarbonsäure oder ein an der CH-aciden Methylgruppe mono-alkylsubstituiertes Derivat dieser Säuren, an eine Verbindung, die mindestens zwei zur Michael-Addition befähigte Doppelbindungen enthält aus der Gruppe Ester, Amid, Urethan- oder Harnstoffderivat einer α,β-ungesättigten Mono- oder Dicarbonsäure, wobei das Michael-Additionsprodukt im Mittel mindestens eine polymerisationsfahige Doppelbindung und mindestens eine umesterungs- bzw. umamidierungsfähige Estergruppe pro Molekül aufweist.

2. Härtungskomponente nach Anspruch 1, dadurch gekennzeichnet, daß die α,β-ungesättigte Mono- oder Dicarbonsäure in der zur Michael-Addition befähigten, Doppelbindungen enthaltenden Verbindung Acrylsäure, Methacrylsäure, Dimethylacrylsäure, Crotonsäure, Maleinsäure oder Fumarsäure ist.

3. Härtungskomponente nach Anspruch 1 und/oder 2, dadurch gekennzeichnet, daß der zur Michael-Addition befähigte Carbonsäureester ein Methyl-, Ethyl-, Butyl- oder 2-Ethylhexylester ist.

4. Härtungskomponente nach einem oder mehreren der Ansprüche 1 bis 3, dadurch gekennzeichnet, daß die zur Michael-Addition befähigte, Doppelbindungen enthaltende Verbindung einen Ester einer α,β-ungesättigten Mono- oder Dicarbonsäure mit einem Polyol darstellt.

5. Härtungskomponente nach Anspruch 4, dadurch gekennzeichnet, daß es sich bei dem Ester um Alkandioldiacrylat oder -dimethylacrylat, Trimethylolpropantriacrylat oder -trimethacrylat oder Pentaerythrittetra acrylat oder -tetramethacrylat handelt.

6. Härtungskomponente nach einem oder mehreren der Ansprüche 1 bis 3, dadurch gekennzeichnet, daß die zur Michael-Addition befähigte, Doppelbindungen enthaltende Verbindung ein Mischester aus einer α,β-ungesättigten Dicarbonsäure, einem Diol und dem Glycerinester einer in α-Stellung verzweigten Carbonsäure mit 9-11 C-Atomen ist.

7. Härtungskomponente nach einem oder mehreren der Ansprüche 1 bis 3, dadurch gekennzeichnet, daß die zur Michael-Addition befähigte, Doppelbindungen enthaltende Verbindung ein Amid der allgemeinen Formel

$$Rn\ (A{-}Ac)_n \qquad (III)$$

darstellt, in der

$R_n$ der Rest einen n-wertigen Amins,

A eine Amidogruppe,

Ac der Acylrest einer α,β-ungesättigten Mono- oder Dicarbonsäure und

n eine ganze Zahl, mindestens 2, ist.

8. Härtungskomponente nach Anspruch 7, dadurch gekennzeichnet, daß es sich bei dem Amid um Methylenbisacrylamid, Toluylenbisacrylamid, Hexamethylenbisacrylamid oder Isophoronbisacrylamid handelt.

9. Härtungskomponente nach einem oder mehreren der Ansprüche 1 bis 3, dadurch gekennzeichnet, daß das Michael-Additionsprodukt ein substituiertes Urethan oder ein substituierter Harnstoff der allgemeinen Formel

$$(Ac\overset{O}{\overset{\|}{C}} - B - A)_n - R_{m+n}\ (A - B - \overset{O}{\overset{\|}{C}} - AcM)_m \qquad (I)$$

ist, in der

$R_{m+n}$ der (m+n)-wertige Rest eines multifunktionellen Isocyanats ist,

m eine ganze Zahl, mindestens 1, und

n eine ganze Zahl, mindestens 1, ist,

A eine chemische Bindung oder einen Amidoalkylen-, O-Alkylen-, einen Amidocycloalkylen- oder einen O-Cycloalkylenrest bedeutet,

B eine Amidogruppe oder ein Sauerstoffatom ist,

$\overset{O}{\overset{\|}{C}}Ac$ der Acylrest einer α,β-ungesättigten Mono- oder Dicarbonsäure ist und

M den durch Michael-Addition an das Molekül addierten Ester einer Mono- oder Dicarbonsäure bedeutet, mit der Maßgabe, daß das Molekül mindestens eine polymerisierbare Doppelbindung und mindestens eine Estergruppe aus dem zur Michael-Addition befähigten Carbonsäureester (M) enthält, und daß B eine Amidogruppe ist, wenn A eine chemische Bindung ist.

10. Härtungskomponente nach Anspruch 9, dadurch gekennzeichnet, daß A in der Formel (I) ein Rest der Formel

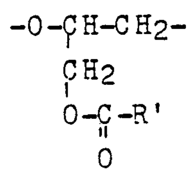

(II)

ist, wobei R′ ein in α-Stellung zu der Carboxylgruppe verzweigter Alkylrest mit 9-11 C-Atomen ist, und B ein Sauerstoffatom darstellt.

11. Härtungskomponente nach Anspruch 9, dadurch gekennzeichnet, daß in Formel (I) die Gruppe A ein von einem 1,2-Diol mit mindestens 5 C-Atomen in unverzweigter Kette abgeleiteter Rest und B ein Sauerstoffatom ist.

12. Härtungskomponente nach Anspruch 9, dadurch gekennzeichnet, daß A in Formel (I) die Struktur

$$O(CH_2)_Y{-}O{-}\overset{O}{\overset{\|}{C}}{-}(CH_2)_Z{-}$$

aufweist, B ein Sauerstoffatom, Y eine ganze Zahl, vorzugsweise 2, und Z eine ganze Zahl, mindestens 5, ist.

13. Verwendung der Verbindungen gemäß einem oder mehreren der Ansprüche 1 bis 12 als Härter für Kunstharze, die zur Ester- und/oder Amidbildung mit Carbonsäuren befähigte Gruppen enthalten.

14. Verwendung nach Anspruch 13 als Härter in Zubereitungen für die elektrische Tauchlackierung.

**Patentansprüche** (für den Vertragsstaat AT)

1. Verfahren zur Herstellung von Härterkomponenten für Kunstharze, die zur Ester- und/oder Amidbildung mit Carbonsäuren befähigte Gruppen enthalten, dadurch gekennzeichnet, daß man einen zur Michael-Addition befähigten Mono- oder Dicarbonsäureester aus der Gruppe Ester der Malonsäure, Cyanessigsäure, Acetessigsäure, Acetondicarbonsäure oder ein an der CH-aciden Methylgruppe monoalkylsubstituiertes Derivat dieser Säuren, an eine Verbindung anlagert, die mindestens zwei zur Michael-Addition befähigte Doppelbindungen enthält aus der Gruppe Ester, Amid, Urethan- oder Harnstoffderivat einer α,β-ungesättigten Mono- oder Dicarbonsäure, mit der Meßgabe, daß die Reaktionstemperatur so ausgewählt wird, daß die gebildete Additionsverbindung im Mittel mindestens eine polymerisationsfähige Doppelbindung und mindestens eine umesterungs- bzw. umamidierungsfähige Estergruppe pro Molekül enthält.

2. Verfahren nach Anspruch 1, dadurch gekennzeichnet, als die α,β-ungesättige Mono- oder Dicarbonsäure in der zur Michael-Addition befähigten, Doppelbindungen enthaltenden Verbindung Acrylsäure, Methacrylsäure, Dimethylacrylsäure, Crotonsäure, Maleinsäure oder Fumarsäure ist.

3. Verfahren nach Anspruch 1 und/oder 2, dadurch gekennzeichnet, daß als zur Michael-Addition befähigter Carbonsäureester ein Methyl-, Ethyl-, Butyl- oder 2-Ethylhexylester eingesetzt wird.

4. Verfahren nach einem oder mehreren der Ansprüche 1 bis 3, dadurch gekennzeichnet, daß die zur Michael-Addition befähigte, Doppelbindungen enthaltende Verbindung einen Ester einer α,β-ungesättigten Mono- oder Dicarbonsäure mit einem Polyol darstellt.

5. Verfahren nach Anspruch 4, dadurch gekennzeichnet, daß es sich bei dem Ester um Alkandioldiacrylat oder -dimethylacrylat, Trimethylolpropantriacrylat oder -trimethacrylat oder Pentaerythrittetra acrylat oder -tetramethacrylat handelt.

6. Verfahren nach einem oder mehreren der Ansprüche 1 bis 3, dadurch gekennzeichnet, daß die zur Michael-Addition befähigte, Doppelbindungen enthaltende Verbindung ein Mischester aus einer α,β-ungesättigten Dicarbonsäure, einem Diol und dem Glycerinester einer in α-Stellung verzweigten Carbonsäure mit 9-11 C-Atomen ist.

7. Verfahren nach einem oder mehreren der Ansprüche 1 bis 3, dadurch gekennzeichnet, daß die zur Michael-Addition befähigte, Doppelbindungen enthaltende Verbindung ein Amid der allgemeinen Formel

$$R_n\,(A{-}Ac)_n \qquad (III)$$

darstellt, in der

$R_n$ der Rest einen n-wertigen Amins,
A eine Amidogruppe,
Ac der Acylrest einer α,β-ungesättigten Mono- oder Dicarbonsäure und
n eine ganze Zahl, mindestens 2, ist.

8. Verfahren nach Anspruch 7, dadurch gekennzeichnet, daß es sich bei dem Amid um Methylenbisacrylamid, Toluylenbisacrilamid, Hexamethylenbisacrylamid oder Isophoronbisacrylamid handelt.

9. Verfahren nach einem oder mehreren der Ansprüche 1 bis 3, dadurch gekennzeichnet, daß man den zur Michael-Addition befähigten Mono- oder Dicarbonsäureester anlagert an ein substituiertes Urethan oder einen substituierten Harnstoff der allgemeinen Formel

$$(Ac\overset{O}{\overset{\|}{C}} - B - A)_n - R_{m+n}\,(A - B - \overset{O}{\overset{\|}{C}} - AcM)_m \qquad (I)$$

ist, in der

$R_{m+n}$ der (m+n)-wertige Rest eines multifunktionellen Isocyanats ist,
m eine ganze Zahl, mindestens 1, und
n eine ganze Zahl, mindestens 1, ist,
A eine chemische Bindung oder einen Amidoalkylen-, O-Alkylen-, einen Amidocycloalkylen- oder einen O-Cycloalkylenrest bedeutet,
B eine Amidogruppe oder ein Sauerstoffatom ist,
$\overset{O}{\overset{\|}{C}}Ac$ der Acylrest einer α,β-ungesättigten Mono- oder Dicarbonsäure ist und
M den durch Michael-Addition an das Molekül addierten Ester einer Mono- oder Dicarbonsäure bedeutet, mit der Maßgabe, daß das Molekül mindestens eine polymerisierbare Doppelbindung und mindestens eine Estergruppe aus dem zur Michael-Addition befähigten Carbonsäureester (M) enthält, und daß B eine Amidogruppe ist, wenn A eine chemische Bindung ist.

10. Verfahren nach Anspruch 9, dadurch gekennzeichnet, daß man als substituiertes Urethan oder substituierten Harnstoff der Formel (I) eine Verbindung einsetzt, in der A einen Rest der Formel

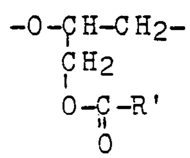

(II)

bedeutet, wobei R′ ein in α-Stellung zu der Carboxylgruppe verzweigter Alkylrest mit 9-11 C-Atomen ist, und B ein Sauerstoffatom darstellt.

11. Verfahren nach Anspruch 9, dadurch gekennzeichnet, daß man als substituiertes Urethan oder substituierten Harnstoff der Formel (I) eine Verbindung einsetzt, in der A von einem 1,2-Diol mit mindestens 5 C-Atomen in unverzweigter Kette abgeleiteter Rest und B ein Sauerstoffatom ist.

12. Verfahren nach Anspruch 9, dadurch gekennzeichnet, daß man als substituiertes Urethan oder substituierten Harnstoff der Formel (I) eine Verbindung einsetzt, in der A in Formel (I) die Struktur

$$O(CH_2)_Y-O-\overset{\overset{\displaystyle O}{\|}}{C}-(CH_2)_Z-$$

aufweist, B ein Sauerstoffatom, Y eine ganze Zahl, vorzugsweise 2, und Z eine ganze Zahl, mindestens 5, ist.

13. Verwendung der Verbindungen gemaß einem oder mehreren der Ansprüche 1 bis 12 als Härter für Kunstharze, die zur Ester- und/oder Amidbildung mit Carbonsäuren befähigte Gruppen enthalten.

14. Verwendung nach Anspruch 13 als Härter in Zubereitungen für die elektrische Tauchlackierung.

**Claims** (for the Contracting States : BE, CH, DE, FR, GB, IT, LI, NL, SE)

1. A curing component for synthetic resins containing groups capable of ester formation and/or amide formation with carboxylic acids, which is composed of the Michael addition product of a monocarboxylic or dicarboxylic acid ester belonging to the group comprising malonic acid, cyanoacetic acid, acetoacetic acid, acetonedicarboxylic acid or a derivative of these acids which is monosubstituted by alkyl on the CH-acid methyl group, capable of undergoing Michael addition, with a compound which contains at least two double bonds capable of undergoing Michael addition, and which belongs to the group comprising the ester, amide, urethane or urea derivative of an α,β-unsaturated monocarboxylic or dicarboxylic acid, the Michael addition product containing, per molecule, on average, at least one polymerizable double bond and at least one ester group capable of transesterification and/or transamidation.

2. A curing component as claimed in claim 1, wherein the α,β-unsaturated monocarboxylic or dicarboxylic acid in the compound containing double bonds and capable of undergoing Michael addition is acrylic acid, methacrylic acid, dimethylacrylic acid, crotonic acid, maleic acid or fumaric acid.

3. A curing component as claimed in claim 1 and/or 2, wherein the carboxylic acid ester capable of undergoing Michael addition is a methyl, ethyl, butyl or 2-ethylhexyl ester.

4. A curing component as claimed in one or more of claims 1 to 3, wherein the compound containing double bonds is capable of undergoing Michael addition and an ester of an α,β-unsaturated monocarboxylic or dicarboxylic acid with a polyol.

5. A curing component as claimed in claim 4, wherein the ester is an alkanediol diacrylate or dimethylacrylate, trimethylolpropane triacrylate or trimethacrylate or pentaerythritol tetraacrylate or tetramethacrylate.

6. A curing component as claimed in one or more of claims 1 to 3, wherein the compound containing double bonds and capable of undergoing Michael addition, is a mixed ester formed from an α,β-unsaturated dicarboxylic acid, a diol and the glycerol ester of a carboxylic acid which has 9-11 carbon atoms and is branched in the α-position.

7. A curing component as claimed in one or more of claims 1 to 3, wherein the compound containing double bonds and capable of undergoing Michael addition is an amide of the general formula

$$R_n(A—Ac)_n \qquad (III)$$

in which $R_n$ is the radical of an n-valent amine, A is an amido group, Ac is the acyl radical of an α,β-unsaturated monocarboxylic or dicarboxylic acid and n is an integer, at least 2.

8. A curing component as claimed in claim 7, wherein the amide is methylene bisacrylamide, toluylene bisacrylamide, hexamethylene, bisacrylamide or isophorone bisacrylamide.

9. A curing component as claimed in one or more of claims 1 to 3, wherein the Michael addition product is a substituted urethane or a substituted urea of the general formula

$$(Ac\overset{\overset{\displaystyle O}{\|}}{C} - B - A)_n - R_{m+n}\ (A - B - \overset{\overset{\displaystyle O}{\|}}{C} - AcM)_m \qquad (I)$$

in which $R_{m+n}$ is the (m+n)-valent radical of a polyfunctional isocyanate, m is an integer, at least 1, and n is an integer, at least 1, A denotes a chemical bond or an amidoalkylene, O-alkylene, an amidocycloalkylene or O-cycloalkylene radical, B is an amido group or an oxygen atom,

$\overset{O}{\overset{\|}{C}}Ac$ is the acyl radical of an α,β-unsaturated monocarboxylic or dicarboxylic acid and M denotes the ester of a monocarboxylic or dicarboxylic acid which has undergone an addition reaction with the molecule by means of Michael addition, subject to the proviso that the molecule contains at least one polymerizable double bond and at least one ester group from the carboxylic acid ester (M) which is capable of undergoing Michael addition, and that B is an amido group, if A is a chemical bond.

10. A curing component as claimed in claim 9, wherein A in the formula (I) is a radical of the formula

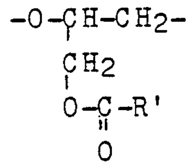

in which R′ is an alkyl radical which has 9-11 carbon atoms and is branched in the α-position relative to the carboxyl group and B represents an oxygen atom.

11. A curing component as claimed in claim 9, wherein the group A in formula (I) is a radical derived from a 1,2-diol having at least 5 carbon atoms in an unbranched chain, and B is an oxygen atom.

12. A curing component as claimed in claim 9, wherein A in formula (I) has the structure

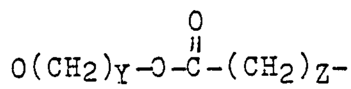

B is an oxygen atom, Y is an integer, preferably 2, and Z is an integer, at least 5.

13. The use of the compounds as claimed in one or more of claims 1 to 12 as curing components for synthetic resins containing groups capable of ester formation and/or amide formation with carboxylic acids.

14. Use as claimed in claim 13 as curing components in preparations for electrocoating.

**Claims** (for the Contracting State AT)

1. A process for the preparation of a curing component for synthetic resins containing groups capable of ester formation and/or amide formation with carboxylic acids, which comprises adding on a monocarboxylic or dicarboxylic acid ester which is capable of undergoing Michael addition and belongs to the group composed of esters of malonic acid, cyanoacetic acid, acetoacetic acid or acetonedicarboxylic acid or a derivative of these acids which is monosubstituted by alkyl on the CH-acid methyl group, to a compound which contains at least two double bonds capable of undergoing Michael addition and belongs to the group composed of the ester, amide, urethane or urea derivative of an α,β-unsaturated monocarboxylic or dicarboxylic acid, subject to the proviso that the reaction temperature is chosen so that the addition compound formed contains, per molecule, on average at least one polymerizable double bond and at least one ester group capable of transesterification and/or transamidation.

2. The process as claimed in claim 1, wherein the α,β-unsaturated monocarboxylic or dicarboxylic acid in the compound containing double bonds capable of undergoing Michael addition is acrylic acid, methacrylic acid dimethylacrylic acid, crotonic acid, maleic acid or fumaric acid.

3. The process as claimed in claim 1 and/or 2, wherein the carboxylic acid ester capable of undergoing Michael addition is a methyl, ethyl, butyl or 2-ethylhexyl ester.

4. The process as claimed in one or more of claims 1 to 3, wherein the compound containing double bonds and capable of undergoing Michael addition is an ester of an α,β-unsaturated monocarboxylic or dicarboxylic acid with a polyol.

5. The process as claimed in claim 4, wherein the ester is an alkanediol diacrylate or dimethylacrylate, trimethylolpropane triacrylate or trimethacrylate or pentaerythritol tetraacrylate or tetramethacrylate.

6. The process as claimed in one or more of claims 1 to 3, wherein the compound containing double bonds and capable of undergoing Michael addition is a mixed ester formed from an α,β-unsaturated dicarboxylic acid, a diol and the glycerol ester of a carboxylic acid which has 9-11 carbon atoms and is branched in the α-position.

7. The process as claimed in one or more of claims 1 to 3, wherein the compound containing double bonds and capable of undergoing Michael addition is an amide of the general formula

$$R_n(A—Ac)_n \qquad (III)$$

in which $R_n$ is the radical of an n-valent amine, A is an amido group, Ac is the acyl radical of an α,β-unsaturated monocarboxylic or dicarboxylic acid and n is an integer, at least 2.

8. The process as claimed in claim 7, wherein the amide is methylene bisacrylamide, toluylene bisacrylamide, hexamethylene bisacrylamide or isophorone bisacrylamide.

9. The process as claimed in one or more of claims 1 to 3 which comprises adding on the monocarboxylic or dicarboxylic acid ester, capable of undergoing Michael addition, to a substituted urethane or a substituted urea of the general formula

$$(Ac\overset{\overset{O}{\|}}{C} - B - A)_n - R_{m+n}\,(A - B - \overset{\overset{O}{\|}}{C} - AcM)_m \qquad (I)$$

in which $R_{m+n}$ is the (m+n)-valent radical of a polyfunctional isocyanate, m is an integer, at least 1, n is an integer, at least 1, A denotes a chemical bond or an amidoalkylene, O-alkylene, amidocycloalkylene or O-cycloalkylene radical, B is an amido group or an oxygen atom,

$\overset{\overset{O}{\|}}{C}Ac$ is the acyl radical of an α,β-unsaturated monocarboxylic or dicarboxylic acid and M denotes the ester of a monocarboxylic or dicarboxylic acid which has undergone an addition reaction with the molecule by means of Michael addition, subject to the proviso that the molecule contains at least one polymerizable double bond and at least one ester group from the carboxylic acid ester (M) which is capable of undergoing Michael addition, and that B is an amido group, if A is a chemical bond.

10. The process as claimed in claim 9, wherein the substituted urethane or substituted urea of the formula (I) employed is a compound in which A denotes a radical of the formula

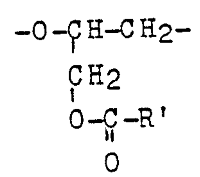

(II)

in which R′ is an alkyl radical which has 9-11 carbon atoms and is branched in the α-position relative to the carboxyl group and B represents an oxygen atom.

11. The process as claimed in claim 9, wherein the substituted urethane or substituted urea of the formula (I) employed is a compound in which A is a radical derived from a 1,2-diol having at least 5 carbon atoms in an unbranched chain, and B is an oxygen atom.

12. The process as claimed in claim 9, wherein the substituted urethane or substituted urea of the formula (I) employed is a compound in which A in formula (I) has the structure

$$O(CH_2)_Y-O-\overset{\overset{O}{\|}}{C}-(CH_2)_Z-$$

B is an oxygen atom, Y is an integer, preferably 2, and Z is an integer, at least 5.

13. The use of compounds as claimed in one or more of claims 1 to 12 as curing components for synthetic resins containing groups capable of ester formation and/or amide formation with carboxylic acids.

14. Use as claimed in claim 13 as curing components in preparations for electrocoating.

**Revendications** (pour les Etats contractants : BE, CH, DE, FR, GB, IT, LI, NL, SE)

1. Composante durcisseur pour résines artificielles contenant des radicaux capables de former des esters et/ou des amides avec des acides carboxyliques, composante constituée du produit d'addition de Michael résultant de la fixation d'un ester d'acide monocarboxylique ou dicarboxylique apte à donner une réaction de Michael et pris dans l'ensemble constitué par les esters de l'acide malonique, de l'acide cyanacétique, de l'acide acétylacétique, de l'acide acétone-dicarboxylique et des dérivés de ces acides dont le radical méthylène à CH acide est monoalkylé, sur un composé qui contient au moins deux doubles liaisons aptes à donner une addition de Michael et qui est pris dans l'ensemble constitué par les esters, les amides, les uréthannes et les urées dérivant d'acides monocarboxyliques et dicarboxyliques insaturés en α, β, le produit d'addition de Michael contenant par molécule, en moyenne, au moins une double liaison polymérisable et au moins un radical d'ester capable de donner une réaction de transestérification ou de transamidation.

2. Composante durcisseur selon la revendication 1 caractérisée en ce que l'acide monocarboxylique ou dicarboxylique insaturé en α, β dans le composé contenant des doubles liaisons capable de donner

une addition de Michael est l'acide acrylique, l'acide méthacrylique, l'acide diméthylacrylique, l'acide crotonique, l'acide maléique ou l'acide fumarique.

3. Composante durcisseur selon l'une des revendications 1 et 2, caractérisée en ce que l'ester d'acide carboxylique capable de donner une addition de Michael est un ester méthylique, éthylique, butylique ou éthyl-2 hexylique.

4. Composante durcisseur selon l'une quelconque des revendications 1 à 3, caractérisée en ce que le composé contenant des doubles liaisons capables de donner une addition de Michael est un ester dérivant d'un acide monocarboxylique ou dicarboxylique insaturé en α, β et d'un polyol.

5. Composante durcisseur selon la revendication 4, caractérisée en ce que l'ester est un bis-acrylate ou bis-méthacrylate d'alcane-diol, le tris-acrylate ou tris-méthacrylate du triméthylol-propane, ou le tétrakis-acrylate ou tétrakis-méthacrylate du pentaérythrol.

6. Composante durcisseur selon l'une quelconque des revendications 1 à 3, caractérisée en ce que le composé contenant des doubles liaisons capables de donner une addition de Michael est un ester mixte dérivant d'un acide dicarboxylique insaturé en α, β, d'un diol et de l'ester du glycérol et d'un acide carboxylique ramifié en position α et contenant de 9 à 11 atomes de carbone.

7. Composante durcisseur selon l'une quelconque des revendications 1 à 3, caractérisée en ce que le composé contenant des doubles liaisons et capable de donner une addition de Michael est un amide répondant à la formule générale III :

$$R_n(A\text{—}Ac)_n \qquad \text{(III)}$$

dans laquelle

$R_n$ représente le radical d'une amine de fonctionnalité égale à n,

A représente un radical amino,

$A_c$ représente le radical acyle d'un acide monocarboxylique ou dicarboxylique insaturé en α,β et

n désigne un nombre entier qui est au moins égal à 2.

8. Composante durcisseur selon la revendication 7, caractérisée en ce que l'amide est le méthylène-bis-acrylamide, un toluylène-bis-acrylamide, l'hexaméthylène-bis-acrylamide ou l'isophorone-bis-acrylamide.

9. Composante durcisseur selon l'une quelconque des revendications 1 à 3, caractérisée en ce que le produit d'addition de Michael est un uréthanne substitué ou une urée substituée répondant à la formule générale I :

$$(Ac\overset{O}{\overset{\|}{C}} - B - A)_n - R_{m+n}\,(A - B - \overset{O}{\overset{\|}{C}} - AcM)_m \qquad \text{(I)}$$

dans laquelle :

$R_{m+n}$ représente le radical de valence (m+n) d'un isocyanate multifonctionnel,

m représente un nombre entier qui est au moins égal à 1,

n représente un nombre entier qui est au moins égal à 1,

A représente une liaison chimique ou un radical amino-alkylène, O-alkylène, amino-cycloalkylène ou O-cycloalkylène,

B représente un radical amino ou un atome d'oxygène,

$\overset{O}{\overset{\|}{C}}Ac$ représente le radical acyle d'un acide monocarboxylique ou dicarboxylique insaturé en α, β et

M représente l'ester d'un acide monocarboxylique ou dicarboxylique qui a été fixé sur la molécule par une addition de Michael,

avec les conditions que la molécule contienne au moins une double liaison polymérisable et au moins un radical d'ester provenant de l'ester (M) d'acide carboxylique capable de donner une addition de Michael, et que B représente un radical amino dans le cas où A représente une liaison chimique.

10. Composante durcisseur selon la revendication 9, caractérisée en ce que A, dans la formule I, représente un radical répondant à la formule II :

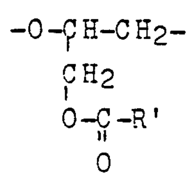

(II)

dans laquelle R' représente un radical alkyle contenant de 9 à 11 atomes de carbone et ramifié en position α relativement au radical carboxy, et B représente un atome d'oxygène.

11. Composante durcisseur selon la revendication 9, caractérisée en ce que, dans la formule I, le

symbole A représente un radical dérivant d'un diol-1,2 contenant au moins 5 atomes de carbone en chaîne non ramifiée, et B représente un atome d'oxygène.

12. Composante durcisseur selon la revendication 9, caractérisée en ce que A, dans la formule I, représente un radical

$$O(CH_2)_Y-O-\overset{O}{\overset{\|}{C}}-(CH_2)_Z-$$

B représente un atome d'oxygène, Y représente un nombre entier, de préférence le nombre 2, et Z représente un nombre entier supérieur ou égal à 5.

13. Application des composés selon l'une quelconque des revendications 1 à 12 comme durcisseurs pour des résines artificielles qui contiennent des radicaux capables de former des esters et/ou des amides avec des acides carboxyliques.

14. Application selon la revendication 13 comme durcisseurs dans des compositions pour le peinturage par trempage électrophorétique.

**Revendications** (pour l'Etat contractant AT)

1. Procédé pour préparer des composantes durcisseurs pour résines artificielles contenant des radicaux capables de former des esters et/ou des amides avec des acides carboxyliques, procédé caractérisé en ce qu'on fixe un ester d'acide monocarboxylique ou dicarboxylique capable de donner une addition de Michael et pris dans l'ensemble constitué par les esters de l'acide malonique, de l'acide cyanacétique, de l'acide acétylacétique, de l'acide acétone-dicarboxylique et des dérivés de ces acides dont le radical méthylène à CH acide est mono-alkylé, sur un composé qui contient au moins deux doubles liaisons capables de donner une addition de Michael et qui est pris dans l'ensemble constitué par les esters, les amides, les uréthannes et les urées dérivant d'acides monocarboxyliques et dicarboxyliques insaturés en α, β, avec la condition que la température réactionnelle soit choisie de telle façon que le composé d'addition formé contienne en moyenne, par molécule, au moins une double liaison polymérisable et au moins un radical d'ester capable de donner une réaction de transestérification ou de transamidation.

2. Procédé selon la revendication 1 caractérisé en ce que l'acide monocarboxylique ou dicarboxylique insaturé en α, β dans le composé contenant des doubles liaisons capables de donner une addition de Michael est l'acide acrylique, l'acide méthacrylique, l'acide diméthylacrylique, l'acide crotonique, l'acide maléique ou l'acide fumarique.

3. Procédé selon l'une des revendications 1 et 2, caractérisé en ce qu'on utilise, comme ester d'acide carboxylique capable de donner une addition de Michael, un ester méthylique, éthylique, butylique ou éthyl-2 hexylique.

4. Procédé selon l'une quelconque des revendications 1 à 3, caractérisé en ce que le composé contenant des doubles liaisons capables de donner une addition de Michael est un ester dérivant d'un acide monocarboxylique ou dicarboxylique insaturé en α, β et d'un polyol.

5. Procédé selon la revendication 4, caractérisé en ce que l'ester est un bis-acrylate ou bis-méthacrylate d'alcane-diol, le tris-acrylate ou tris-méthacrylate du triméthylol-propane, ou le tétrakis-acrylate ou tétrakis-méthacrylate du pentaérythrol.

6. Procédé selon l'une quelconque des revendications 1 à 3, caractérisé en ce que le composé contenant des doubles liaisons et capable de donner une addition de Michael est un ester mixte qui dérive d'un acide dicarboxylique insaturé en α, β, d'un diol et d'un ester formé par le glycérol avec un acide carboxylique contenant de 9 à 11 atomes de carbone et ramifié en position α.

7. Procédé selon l'une quelconque des revendications 1 à 3, caractérisé en ce que le composé contenant des doubles liaisons et capable de donner une addition de Michael est un amide répondant à la formule générale III :

$$R_n(A—Ac)_n \qquad (III)$$

dans laquelle

$R_n$ représente le radical d'une amine de fonctionnalité égale à n,

A représente un radical amino,

Ac représente le radical acyle d'un acide monocarboxylique ou dicarboxylique insaturé en α, β et

n désigne un nombre entier qui est au moins égal à 2.

8. Procédé selon la revendication 7, caractérisé en ce que l'amide est le méthylène-bis-acrylamide, un toluylène-bis-acrylamide, l'hexaméthylène-bis-acrylamide ou l'isophorone-bis-acrylamide.

9. Procédé selon l'une quelconque des revendications 1 à 3, caractérisé en ce qu'on fixe l'ester d'acide monocarboxylique capable de donner une addition de Michael sur un uréthanne substitué ou une urée substituée répondant à la formule générale I :

$$(AcC(=O) - B - A)_n - R_{m+n}(A - B - C(=O) - AcM)_m \qquad (I)$$

dans laquelle :

$R_{m+n}$ représente le radical de valence (m + n) d'un isocyanate multifonctionnel,

m représente un nombre entier qui est au moins égal à 1,

n représente un nombre entier qui est au moins égal à 1,

A représente une liaison chimique ou un radical amino-alkylène, O-alkylène, amino-cycloalkylène ou O-cycloalkylène,

B représente un radical amino ou un atome d'oxygène,

O
||
CAc représente le radical acyle d'un acide monocarboxylique ou dicarboxylique insaturé en α, β et

M représente l'ester d'un acide monocarboxylique ou dicarboxylique qui a été fixé sur la molécule par une addition de Michael,

avec les conditions que la molécule contienne au moins une double liaison polymérisable et au moins un radical d'ester provenant de l'ester (M) d'acide carboxylique capable de donner une addition de Michael, et que B représente un radical amino dans le cas où A représente une liaison chimique.

10. Procédé selon la revendication 9, caractérisé en ce qu'on utilise, comme uréthanne substitué ou urée substituée de formule I, un composé dans lequel A représente un radical répondant à la formule II :

$$-O-CH(CH_2-O-C(=O)-R')-CH_2- \qquad (II)$$

dans laquelle R' représente un radical alkyle contenant de 9 à 11 atomes de carbone et ramifié en position α par rapport au radical carboxy, et B représente un atome d'oxygène.

11. Procédé selon la revendication 9, caractérisé en ce qu'on utilise, comme uréthanne substitué ou urée substituée de formule I, un composé dans lequel A représente un radical dérivant d'un diol-1,2 contenant au moins 5 atomes de carbone en chaîne non ramifiée, et B représente un atome d'oxygène.

12. Procédé selon la revendication 9, caractérisé en ce qu'on utilise, comme uréthanne substitué ou urée substituée de formule I, un composé dans lequel A, dans la formule I, représente un radical.

$$O(CH_2)_Y-O-C(=O)-(CH_2)_Z-$$

B représente un atome d'oxygène, Y représente un nombre entier, de préférence le nombre 2, et Z représente un nombre entier supérieur ou égal à 5.

13. Application des composés selon l'une quelconque des revendications 1 à 12 comme durcisseurs pour des résines artificielles qui contiennent des radicaux capables de former des esters et/ou des amides avec des acides carboxyliques.

14. Application selon la revendication 13 comme durcisseurs dans des compositions pour le peinturage par trempage électrophorétique.